# EUROPÄISCHE PATENTSCHRIFT

(11) **EP 0 477 518 B1**
(45) Veröffentlichungstag und Bekanntmachung des Hinweises auf die Patenterteilung: **08.03.1995**
(21) Anmeldenummer: 91113533.3
(22) Anmeldetag: 13.08.1991
(51) Int. Cl.: G02B 6/26, G02B 6/42

(54) **Vorrichtung zum Ein-und/oder Auskoppeln von Licht für Monomode-Lichtwellenleiter**
Arrangement for coupling and/or uncoupling of light for a single-mode lightguide
Dispositif pour le couplage et/ou le découplage de lumière pour un guide d'ondes lumineuses monomode

(30) Priorität: 11.09.1990 DE 4028790
(43) Veröffentlichungstag der Anmeldung: 01.04.1992
(73) Patentinhaber: ANT Nachrichtentechnik GmbH, D-71522 Backnang (DE)
(72) Erfinder: Neumann, Ernst-Georg, Prof. Dr. rer. nat., W-5800 Wuppertal (DE)

(56) Entgegenhaltungen:
- DE-A- 3 904 662
- GB-A- 2 169 096
- US-A- 4 475 789
- PATENT ABSTRACTS OF JAPAN, Band 9, Nr. 177 (P-375)(1900), 23. Juli 1985; & JP - A - 60050504
- ELECTRONICS LETTERS, Band 13, Nr. 11, Mai 1977, Seiten 319-321; D. OPIELKA: "Radiation characteristics of a step discontinuity in a monomode optical fibre"

## Beschreibung

Die Erfindung betrifft eine Vorrichtung zum Auskoppeln eines Bruchteils der von einem Monomode-Lichtwellenleiter geführten Lichtleistung bzw. zum Einkoppeln von Lichtleistung in einen Monomode-Lichtwellenleiter von einem ersten größeren in einen zweiten kleineren Kerndurchmesser und mit einer sich an die sprungartige Änderung anschließenden langsamen, verlustarmen Anpassung des Kerndurchmessers vom zweiten kleineren bis zu einem dritten Kerndurchmesser.

Aus Jap. Patent Abstract, Vol. 9, Nr. 177 (P-375) [1900] zur JP-A-60-50504 ist es bekannt, eine getaperte Faser mit einer nicht getaperten Faser mit größerem Durchmesser zu verbinden, was ein Bauteil mit einer sprungartigen Änderung des Kerndurchmessers von einem ersten größeren in einen zweiten kleineren Kerndurchmesser und mit einer sich an die sprungartige Änderung anschließenden langsamen, verlustarmen Anpassung des Kerndurchmessers vom zweiten kleineren bis zu einem dritten Kerndurchmesser ergibt. Das Bauteil wird als Dämpfungsglied eingesetzt.

In der optischen Nachrichtentechnik besteht häufig das Problem, einen Teil der in einen durchgehenden Lichtwellenleiter geführten Leistung auszukoppeln, z. B. zur Regelung der Laserleistung, zur Regelung der Verstärkung von optischen Verstärkern, zur optimalen Ausrichtung einer sekundären Faser bei der Herstellung einer Schmelz-Spleißverbindung, zum Anschluß der Empfänger vieler Teilnehmer an ein Lichtwellenleiternetz mit Bus-, Ring- oder Baumstruktur, usw. Umgekehrt besteht auch oft das Problem, Licht mit hohem Wirkungsgrad in einen durchgehenden Lichtwellenleiter einzukoppeln, z. B. um die Einfügungsdämpfung einer Faserverbindung zu minimieren oder um die optischen Sender vieler Teilnehmer an ein Lichtwellenleiternetz anzuschließen. Diese Probleme bestehen sowohl bei der Verwendung optischer Fasern als auch bei planaren Lichtwellenleitern.

Es sind bereits mehrere Koppelvorrichtungen bekannt, die auf verschiedenen physikalischen Prinzipien beruhen:

Richtkoppler nach dem Prinzip des Schmelzkopplers oder nach dem Prinzip des seitlich polierten Lichtwellenleiters, die auf der Verkopplung der Grundmoden in zwei parallelen, dicht benachbarten dielektrischen Leitungen beruhen.

Koppler bei denen zwei Lichtwellenleiterenden unter 45° zur Lichtwellenleiterachse poliert, mit einem dielektrischen Interferenzspiegel beschichtet und fluchtend zusammengefügt sind, die auf der partiellen Reflektion von Lichtwellen an dielektrischen Mehrfachschichten beruhen.

Biegekoppler, die auf dem Effekt beruhen, daß eine Faser bei starkem Biegen Lichtleistung abstrahlt (siehe z.B. DE 39 04 662 A1).

Die Herstellung von Richtkopplern und Spiegelkopplern ist aufwendig. Bei Biegekopplern ist es schwierig, Lichtleistung effektiv einzukoppeln. Um stark anzukoppeln, muß man außerdem den Lichtwellenleiter stark krümmen, so daß die Gefahr eines sofortigen oder späteren Lichtwellenleiterbruches besteht.

Der Erfindung liegt die Aufgabe zugrunde, eine Vorrichtung zum Ein- und/oder Auskoppeln von Licht für Monomode-Lichtwellenleiter anzugeben, mit der es möglich ist, Licht mit hohem Wirkungsgrad aus- bzw. einzukoppeln.

Die Aufgabe wird gelöst mit einer Vorrichtung mit den Merkmalen des Patentanspruches 1. Vorteilhafte Weiterbildungen sind in den Unteransprüchen angegeben.

Erfindungsgemäß wird eine Vorrichtung zum Ein- und/oder Auskoppeln von Licht für Monomode-Lichtwellenleiter mit den folgenden Merkmalen angegeben:
- Der Monomode-Lichtwellenleiter besteht aus einem Kern (1) und einem Martel (2) und weist eine sprungartige Änderung des Kerndurchmessers von einem ersten größeren in einen zweiten kleineren Kerndurchmesser auf.
- An die sprungartige Änderung des Kerndurchmessers schließt sich ein Lichtwellenleiterabschnitt an, der eine langsame, nahezu verlustfreie Anpassung des Kerndurchmesser vom zweiten kleineren bis zu einem dritten Kerndurchmesser aufweist, wobei der dritte Kerndurchmesser dem ersten Kerndurchmesser entsprechen kann.
- Ein optischer Sender oder Empfänger umgibt den Lichtwellenleiter ringförmig und dient zur Ein- und/oder Auskopplung von Licht in die/aus der Sprungstelle.

Die Vorrichtung gemäß der Erfindung beruht auf dem Effekt, daß an der Verbindungsstelle zwischen zwei Lichtwellenleitern mit verschiedenen Kerndurchmessern aufgrund der Fehlanpassung der Felder Lichtleistung abgestrahlt wird, wenn die Änderung der Kerndurchmesser sprungartig, also nicht allmählich ohne Abstrahlungsverluste erfolgt. Das Problem der Abstrahlung von einem Sprung in den Abmessungen ist theoretisch in Neumann und Opielka, "Scattering matrix and radiation characteristics of the junction between two different monomode microwave or optical dielectric waveguides", Quantum Electron, 9(1977), 209 und Opielka, "Radiation characteristics of a step discontinuity in a monomode optical fibre", Electron. Lett. 13(1977), 319 analysiert worden.

Die beiden Veröffentlichungen enthalten Gleichungen, die es gestatten, die relative abgestrahlte Leistung und die Richtcharakteristik der Strahlung für beide Ausbreitungsrichtungen der Lichtwellenleiterwelle zu berechnen.

Erfindungsgemäß wird ein Querschnittssprung zwischen unterschiedlichen Kerndurchmessern von Monomode-Lichtwellenleitern ausgenutzt, um Licht ein- und/oder auszukoppeln. Hinter dem Sprung wird vorwiegend in der Ausbreitungsrichtung der im Lichtwellenleiter geführten Welle eine Welle abgestrahlt. Diese kann mit einem optischen Empfänger detektiert werden, der ringförmig um den Lichtwellenleiter im Bereich der abgestrahlten Welle angeordnet wird. Die ringförmige Anordnung ist sinnvoll, wenn man die abgestrahlte Welle mit geringen Verlusten empfangen will. Analog zum Auskoppeln kann auch das Einkoppeln von Licht mit einem ringförmigen, den Lichtwellenleiter umgebenden Sender erfolgen. Auch das gleichzeitige Ein- und Auskoppeln von Licht ist möglich. Damit sich die Koppelvorrichtung für Fasern einfach in einen normalen Lichtwellenleiter einspleißen läßt, ist es zweckmäßig, hinter dem Querschnittssprung den Kernradius sehr langsam wieder auf den ursprünglichen Wert anwachsen zu lassen. Bei einem solchen Übergang (Taper) wird die Grundmode im Lichtwellenleiter mit verringertem Kerndurchmesser ohne Strahlungsverluste in die Grundmode in dem Lichtwellenleiter mit normalem Kerndurchmesser transformiert. Ein solcher Übergang ist aus der DE 30 12 775 C2 bekannt. Die Abstrahlung ist dabei sehr gering.

Durch die Erfindung wird eine einfache, billig herstellbare und wirksame Vorrichtung zur Aus- und Einkopplung von Licht aus einem bzw. in einen Monomode-Lichtwellenleiter angegeben. Die Vorrichtung ist einfacher und billiger herzustellen als Richtkoppler und Spiegelkoppler. Gegenüber dem Biegekoppler besitzt sie den Vorteil, daß der Lichtwellenleiter nicht gebogen werden muß und somit die Gefahr des Lichtwellenleiterbruchs vermieden wird. Außerdem läßt sich bei Fasern wegen der wesentlich einfacheren Struktur des Feldes der abgestrahlten Welle (sphärische Wellenfronten, Intensität unabhängig von Azimutwinkel) ein höherer Einkoppelwirkungsgrad erzielen. Da der Lichtwellenleiter an beiden Enden der Vorrichtung Standardabmessungen aufweisen kann, läßt sich die Vorrichtung in einfacher Weise mit Hilfe üblicher Spleißgeräte mit verschwindend kleiner Einfügungsdämpfung in eine Faser einspleißen. Der Koppelgrad läßt sich durch passende Dimensionierung des Kern-Radien-Verhältnisses sehr einfach von sehr kleinen Werten bis nahe 100 % festeinstellen. Der Koppelgrad steigt mit der Wellenlänge nur langsam an. Die Vorrichtung ist also intrinsisch breitbandig.

Anhand der Zeichnungen werden Ausführungsbeispiele der Erfindung beschrieben.

Es zeigen:
- Fig. 1 und 2: je einen Längsschnitt durch eine erfindungsgemäße Vorrichtung mit abgestrahlter Welle,
- Fig. 3 und 4: je einen Längsschnitt durch eine erfindungsgemäße Vorrichtung mit eingestrahlter Welle,
- Fig. 5: eine Vorrichtung mit Empfänger und
- Fig. 6: eine Vorrichtung mit Sender.

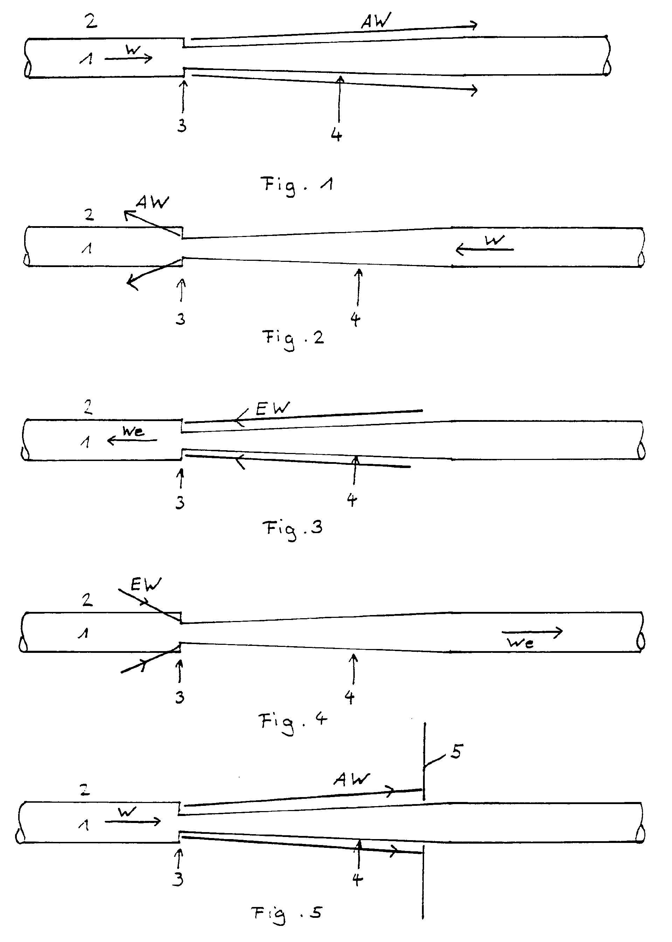

Fig. 1 zeigt im Längsschnitt die Grenze zwischen Kern 1 und Mantel 2 eines Monomode-Lichtwellenleiters. Der Querschnitt des Kerns 1 ist (von links nach rechts) zunächst konstant, wird dann sprunghaft kleiner (Querschnittssprung 3), steigt dann allmählich wieder an (Taper 4), bis der Anfangsdurchmesser wieder erreicht ist. Eine geführte Welle W breitet sich von links nach rechts aus. Der Felddurchmesser der Grundmode in dem Lichtwellenleiter mit dem größeren Kerndurchmesser vor dem Querschnittssprung 3 ist kleiner als der Felddurchmesser der Grundmode in dem Lichtwellenleiter mit dem kleineren Kerndurchmesser unmittelbar hinter dem Querschnittssprung 3. Bedingt durch die Fehlanpassung der transversalen Feldverteilungen entsteht an dem Querschnittssprung 3 eine abgestrahlte Welle AW, die durch die beiden eingezeichneten schräg verlaufenden Lichtstrahlen schematisch dargestellt wird. Die Abstrahlung erfolgt vorwiegend in Vorwärtsrichtung unter kleinen Winkeln zur Lichtwellenleiterachse. Die Leistung der an dem Querschnittssprung 3 reflektierten Grundmode und die Leistung der in Rückrichtung abgestrahlten Welle sind praktisch vernachlässigbar. Wenn die im Lichtwellenleiter geführte Welle eine Kombination von Querschnittssprung 3 und Taper 4 in der entgegengesetzten Richtung durchläuft, wird der gleiche Bruchteil der Leistung abgestrahlt. Die Abstrahlung erfolgt wiederum vorwiegend in Vorwärtsrichtung unter kleinen Winkeln gegen die Lichtwellenleiterachse, wie es schematisch in Fig. 2 durch die beiden schräg verlaufenden Lichtstrahlen dargestellt wird. In reziproken Medien läßt sich jede Lichtwelle in ihrer Ausbreitungsrichtung umkehren. Daher läßt sich an der Stelle eines Querschnittssprungs 3 auch Licht von außen in einen Lichtwellenleiter einkoppeln (Fig. 3 und Fig. 4). In den Figuren 3 und 4 wird eine eingestrahlte Welle EW durch zwei schräg zur Lichtwellenleiterachse geneigte Lichtstrahlen schematisch dargestellt. Es wird eine eingekoppelte Welle We erzeugt, die sich im Lichtwellenleiter ausbreitet. Zur effektiven Einkopplung von Lichtleistung muß die Feldverteilung in der eingestrahlten Welle EW mit der Feldverteilung der am Querschnittssprung abgestrahlten Welle AW möglichst gut übereinstimmen hinsichlich Form der Wellenfront, transversaler Intensitätsverteilung und Polarisation.

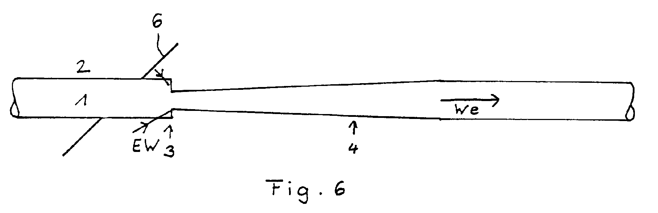

Das Problem der Verbindung von optischem Empfänger oder Sender mit dem Koppler kann auf verschiedene Weisen gelöst werden. In Fig. 5 ist ein Lichtwellenleiter durch eine mit einer Bohrung versehene großflächige Halbleiterphotodiode 5 geführt. Der Durchmesser der Bohrung muß etwas größer als der Einzeldurchmesser des Lichtwellenleiters sein. Bei hinreichend großem Abstand zwischen dem Kerndurchmessersprung 3 und der Photodiode 5 fallen die meisten der vom Querschnittssprung 3 abgestrahlten Photonen auf die lichtempfindliche Fläche der Photodiode und der Kopplungswirkungsgrad ist daher hoch. Besonders vorteilhaft erscheint diese Lösung, wenn die Photodiode 5 Teil einer integriert-optoelektronischen Schaltung ist. Durch das Substrat ist dann ein Loch zu bohren. Zur Ankopplung des Lichtwellenleiters genügt es, den Lichtwellenleiter durch die Bohrung zu ziehen und mit einem transparenten Klebstoff permanent mit der integriertoptoelektronischen Schaltung zu verbinden.

Um Licht in einen Lichtwellenleiter einzukoppeln, kann man in Fig. 5 die Photodiode durch eine mit einer Bohrung versehene Lumineszenzdiode (LED) ersetzen.

Wie in Fig. 6 dargestellt ist es auch möglich, den Lichtwellenleiter durch einen unter einem Winkel von beispielsweise 45° zur Lichtwellenleiterachse aufgestellten durchbohrten Planspiegel 6 zu führen und durch seitliche Lichteinstrahlung Licht in den Lichtwellenleiter einzukoppel. Auch eine Auskopplung kann mit Hilfe eines durchbohrten Planspiegels erfolgen. Verwendet man anstelle des Planspiegels einen Hohlspiegel, so läßt sich die ein- bzw. ausgekoppelte Welle gleichzeitig fokussieren. Die zur effektiven Einkopplung erforderliche Anpassung der Feldverteilungen läßt sich mit Hilfe von Linsensystemen und Phasenplatten erreichen.

Anstelle einer abrupten Änderung des Kerndurchmessers kann man auch eine stetige, jedoch sehr rasche Änderung des Kerndurchmessers, die nicht adiabatisch ist, in der erfindungsgemäßen Vorrichtung verwenden. Zur Herstellung einer erfindungsgemäßen Vorrichtung kann man zunächst in bekannter Weise durch Schmelzen und Ziehen eines Lichtwellenleiters einen langen adiabatischen bikonischen Taper herstellen, bei dem der Manteldurchmesser in der Taille von dem Normwert beispielsweise auf den halben Wert reduziert ist. In der Taille wird durch Biegen, Ziehen und Brechen eine Lichtwellenleiterendfäche präpariert. Danach wird das dünnere Taperende mit einem Ende eines Lichtwellenleiters mit normalem Kerndurchmesser verspleißt. Durch die Oberflächenspannung des flüssigen Glases werden die Lichtwellenleiterachsen dabei automatisch fluchtend ausgerichtet.

## Patentansprüche

1. Vorrichtung zum Ein- und/oder Auskoppeln von Licht mit einem Monomode-Lichtwellenleiter mit den folgenden Merkmalen:
a) Der Monomode-Lichtwellenleiter besteht aus einem Kern (1) und einem Martel (2) und weist eine sprungartige Änderung (3) des Kerndurchmessers von einem ersten größeren in einen zweiten kleineren Kerndurchmesser auf;
b) an die sprungartige Änderung (3) des Kerndurchmessers schließt sich ein Lichtwellenleiterabschnitt an, der eine langsame verlustarme Anpassung (4) des Kerndurchmesser vom zweiten kleineren bis zu einem dritten Kerndurchmesser aufweist,
c) es ist ein optischer Sender oder Empfänger (5) vorgesehen, der den Lichtwellenleiter ringförmig umgibt, um Licht in den Lichtwellenleiter an der Stelle der sprungartigen Änderung einzukoppeln oder um an dieser Stelle ausgekoppeltes Licht zu empfangen.

2. Vorrichtung nach Anspruch 1, wobei als Sender eine Lumineszenzdiode mit einer Bohrung für den Lichtwellenleiter vorgesehen ist.

3. Vorrichtung nach Anspruch 1, wobei als Empfänger (5) eine Halbleiterphotodiode mit einer Bohrung vorgesehen ist.

4. Vorrichtung zum Ein- und/oder Auskoppeln von Licht nach Anspruch 1, wobei ein durchbohrter Hohl- oder Planspiegel (6) vorgesehen ist, der unter einem Winkel zur Lichtwellenleiterachse angeordnet ist, wobei der Lichtwellenleiter durch die bohrung im Hohl- oder Planspiegel (6) verläuft und der Hohl- oder Planspiegel (6) zum Ein- und/oder Auskoppeln des Lichtes dient.

## Claims

1. Device for the coupling in and/or coupling out of light, with a single-mode optical waveguide with the following features:
a) The single-mode optical waveguide consists of a core (1) and a casing (2) and has a steplike change (3) in the core diameter from a first larger core diameter to a second smaller core diameter;
b) the steplike change (3) in the core diameter is adjoined by an optical waveguide portion (4) which has a gradual low-loss adaptation of the core diameter from the second smaller core diameter to a third core diameter,
c) there is provided an optical transmitter or receiver (5) which annularly surrounds the optical waveguide in order to couple light into the optical waveguide at the location of the steplike change or in order to receive light coupled out at this location.

2. Device according to claim 1, wherein a luminescent diode with a bore for the optical waveguide is provided as the transmitter.

3. Device according to claim 1, wherein a semiconductor photodiode with a bore is provided as the receiver (5).

4. Device for the coupling in and/or coupling out of light according to claim 1, wherein a concave or planar mirror (6), which is pierced by a bore and arranged at an angle to the axis of the optical waveguide, is provided, wherein the optical waveguide extends through the bore in the concave or planar mirror (6) and the concave or planar mirror (6) serves for the coupling in and/or coupling out of the light.

## Revendications

1. Dispositif pour le couplage et/ou le découplage de lumière avec un guide d'ondes monomode, avec les caractéristique suivantes :
a) le guide d'ondes lumineuses monomode consiste en une âme (1) et une enveloppe (2), et présente un changement à variation brusque (3) du diamètre d'âme, d'un premier diamètre d'âme plus grand en un deuxième diamètre d'âme plus petit ;
b) au changement à variation brusque (3) du diamètre d'âme, se raccorde une section de guide d'ondes lumineuses, qui présente une adaptation (4) lente, à faible perte, du diamètre d'âme du deuxième diamètre d'âme plus petit jusqu'à un troisième diamètre d'âme ;
c) il est prévu un émetteur optique ou un récepteur optique (5), qui entoure en forme d'anneau le guide d'ondes lumineuses, afin de coupler de la lumière dans le guide d'ondes lumineuses, à l'emplacement du changement à variation brusque, ou afin de recevoir, à cet emplacement, de la lumière découplée.

2. Dispositif selon la revendication 1, une diode luminescente avec un perçage étant prévue comme émetteur pour le guide d'ondes lumineuses.

3. Dispositif selon la revendication 1, une photodiode à semi-conducteur avec un perçage étant prévue comme récepteur (5).

4. Dispositif pour le couplage et/ou le découplage de lumière selon la revendication 1, un miroir creux ou plan (6) percé étant prévu, qui est agencé sous un angle par rapport à l'axe de guide d'ondes lumineuses, le guide d'ondes lumineuses s'étendant à travers le perçage dans le miroir creux ou plan (6), et le miroir creux ou plan (6) servant pour le couplage et/ou le découplage de la lumière.
